Europäisches Patentamt

European Patent Office

Office européen des brevets

(19)

(11)  **EP 0 572 053 B1**

(12)  **EUROPÄISCHE PATENTSCHRIFT**

(45) Veröffentlichungstag und Bekanntmachung des Hinweises auf die Patenterteilung:
    **24.01.1996  Patentblatt 1996/04**

(51) Int. Cl.[6]: **C01B 17/80**, B01J 8/02

(21) Anmeldenummer: 93201140.6

(22) Anmeldetag: **20.04.1993**

(54) **Kontaktkessel zur quasi-isothermen katalytischen Umsetzung von SO2 zu SO3 und Verfahren zum Betreiben desselben**

Contact kettle for the quasi-isothermal catalytic transformation of SO2 in SO3 and process for executing the transformation

Chaudière à contact pour une transformation catalytique quasi-isotherme de SO2 en SO3 et procédé pour la mise en oeuvre de celle-ci

(84) Benannte Vertragsstaaten:
    **BE DE FR NL**

(30) Priorität: **26.05.1992 DE 4217317**

(43) Veröffentlichungstag der Anmeldung:
    **01.12.1993  Patentblatt 1993/48**

(73) Patentinhaber:
  • **METALLGESELLSCHAFT Aktiengesellschaft**
    **D-60015 Frankfurt (DE)**
  • **BASF Aktiengesellschaft**
    **D-67063 Ludwigshafen (DE)**

(72) Erfinder:
  • **Tacke, Michael**
    **W-6382 Friedrichsdorf (DE)**
  • **Ahrens, Peter**
    **W-6453 Seligenstadt (DE)**

  • **Grimm, Hugo**
    **W-8760 Miltenberg (DE)**
  • **Neumann, Heinz**
    **W-6123 Bad König (DE)**
  • **Winkler, Egon**
    **W-6231 Schwalbach/Ts. (DE)**
  • **Werner, Arend, Dr.**
    **W-6702 Bad Dürkheim (DE)**
  • **Beitelschmidt, Walter, Dr.**
    **W-6700 Ludwigshafen (DE)**
  • **Triebskorn, Bruno, Dr.**
    **W-6700 Ludwigshafen (DE)**

(74) Vertreter: **Rieger, Harald, Dr.**
    **D-60323 Frankfurt (DE)**

(56) Entgegenhaltungen:
    **EP-A- 0 099 690          DE-C-  672 731**

**Beschreibung**

Die Erfindung betrifft einen Kontaktkessel zur quasi-isothermen katalytischen Umsetzung von $SO_2$ zu $SO_3$ in $SO_2$-haltigen Gasen, bestehend aus einem Kessel mit Katalysatorschüttung, Gaseinlaß an einem Ende und Gasauslaß am anderen Ende des Kessels und in der Katalysatorschüttung angeordneten Kühlelementen.

Die katalytische Umsetzung von $SO_2$ zu $SO_3$ erfolgt in den heute üblichen Schwefelsäureanlagen in Kontaktkesseln mit 3 bis 5 voneinander getrennten Kontakthorden mit $V_2O_5$-haltiger Kontaktmasse. Das $SO_2$-haltige Gas mit einem $SO_2$-Gehalt von etwa 2 bis 12 Vol.-% $SO_2$ und dem entsprechenden Sauerstoffgehalt wird mit einer Temperatur von etwa 400-460°C in die erste Kontakthorde geleitet. Da die Reaktion

$$SO_2 + 0.5\ O_2 \rightarrow SO_3$$

exotherm verläuft, liegt die Temperatur des Gases nach dem Durchgang durch die einzelnen Kontakthorden höher als die jeweilige Eintrittstemperatur. Da die Reaktion reversibel ist und sich das Gleichgewicht mit steigender Temperatur zur $SO_2$-Seite verschiebt, muß das Gas vor dem Eintritt in die nächste Kontakthorde gekühlt werden, wobei allerdings die Anspringtemperatur der Kontaktmasse von etwa 380°C nicht unterschritten werden darf. Diese Kühlung der Gase erfolgt zwischen den Kontakthorden in Wärmetauschern durch indirekten Wärmeaustausch. Diese adiabatische Arbeitsweise erfordert für einen guten Umsatz mehrere Kontakthorden mit den dazugehörigen Zwischenwärmetauschern und Gasleitungen.

Es wurde auch bereits vorgeschlagen, die Umsetzung isotherm bzw. quasi-isotherm durchzuführen.

Die Röhrenkontakte haben gegenüber den Hordenkontakten zwar den Vorteil einer solchen quasi-isothermen Reaktionsführung, jedoch die entscheidenden Nachteile, daß für eine gute Wärmeabführung aus der Katalysatormasse ein geringer Rohrdurchmesser und damit selbst bei kleinen Anlagekapazitäten eine große Anzahl von Rohren notwendig ist, die Befüllung der Rohre mit der Katalysatormasse und der Austausch der Katalysatormasse schwierig sind und eine kontrollierte Gasverteilung sehr schwierig ist.

Aus diesen Gründen werden diese Röhrenkontakte seit längerem in der Praxis nicht mehr eingsetzt.

Die DE-OS 33 18 098 schlägt eine ringförmige Katalysatorschüttung zwischen einer gasdurchlässigen Außen- und einer gasdurchlässigen Innenwand vor, wobei die Innenwand ein Mittelrohr bildet. Das Gas strömt in radialer Richtung durch die Katalysatormasse und wird aus dem Mittelrohr abgezogen. In der Katalysatorschüttung sind einzelne Kühlrohre parallel zum Mittelrohr angeordnet. Der Abstand der Kühlrohre voneinander kann in Strömungsrichtung des Gases unterschiedlich sein, um einen möglichst gleichmäßigen Temperaturverlauf zu erzielen. Eine unabhängige Regelung des Temperaturverlaufes sowohl in senkrechter als auch in radialer Richtung ist im Betrieb jedoch nicht möglich.

Die US-PS 1,685,672 zeigt neben Röhrenkontakten auch eine Kontakthorde mit übereinander angeordneten Reihen von einzelnen, horizontal angeordneten Kühlrohren, die durch die Wand des Kontaktkessels geführt sind und an je eine Sammelleitung zur Zufuhr des Kühlmittels und zur Ableitung des Kühlmittels angeschlossen sind. Die Steuerung der Temperatur in der Horde erfolgt entweder in der Weise, daß der Abstand der Kühlrohr-Reihen voneinander in Strömungsrichtung des Gases abnimmt, oder daß bei gleichem Abstand der Reihen eine Drosselung des Kühlmittelstromes durch Anordnung von Stopfen in den Kühlrohren der Reihen erfolgt, die zum Gasaustritt hin liegen. Für eine gute und gleichmäßige Kühlung über den Querschnitt der Katalysatormasse wäre eine Vielzahl von einzelnen Rohren in jeder Reihe in geringem Abstand zueinander erforderlich. Dies würde die Befüllung und Entleerung jedoch erschweren. Trotzdem wäre eine Regelung während des Betriebes sowohl in horizontaler als auch in senkrechter Richtung nur sehr beschränkt möglich.

Der Erfindung liegt die Aufgabe zugrunde, einen Kontaktkessel und ein Verfahren zu seinem Betreiben zu schaffen, die eine quasi-isotherme Umsetzung von $SO_2$ zu $SO_3$ mit hohem Umsatz und guter Regelmöglichkeit ermöglichen, wobei eine einfache Befüllung und Entleerung mit Katalysatormasse möglich ist.

Die Lösung dieser Aufgabe erfolgt durch einen Kontaktkessel zur quasi-isothermen katalytischen Umsetzung von $SO_2$ zu $SO_3$ in $SO_2$-haltigen Gasen, bestehend aus einem Kessel mit Katalysatorschüttung, Gaseinlaß an einem Ende und Gasauslaß am anderen Ende des Kessels und in der Katalysatorschüttung angeordneten Kühlelementen, und ist gekennzeichnet durch

a) in mehreren Reihen hintereinander angeordnete Kühlrohr-Bündel, wobei die Bündel einer folgenden Reihe jeweils versetzt in der Projektion der Zwischenräume der Bündel der vorhergehenden Reihe angeordnet sind,

b) der Abstand der Kühlrohre in den Bündeln so ausgelegt ist, daß praktisch keine ganzen Katalysatorkörper in die Bündel eindringen,

c) eine Ausgestaltung der Bündel, daß der Druckverlust des Gases in den Bündeln etwa dem Druckverlust in der Katalysatorschicht zwischen den Bündeln entspricht, und

d) einen Abstand zwischen den benachbarten Bündeln in den Reihen, der nicht größer ist als die Breite der Bündel in Strömungsrichtung des Gases.

Der Kontaktkessel kann stehend oder liegend angeordnet sein. Die Form der Bündel wird so gewählt, daß die Kontaktmasse beim Einfüllen von den Bündeln in die Zwischenräume zwischen den Bündeln rieselt und daß beim Entleeren keine Kontaktmasse auf den Bündeln liegenbleibt. Besonders geeignet sind eine rhombenförmige Form, eine spitzzulaufende vieleckige oder eine runde Form. Der Abstand der Kühlrohre in den Bündeln richtet sich nach der Größe der Körper der Kontaktmasse. Im allgemeinen liegt der Abstand unter etwa 10 mm. Die Rohrbündel und die Katalysatorfüllung werden im Strömungsguerschnitt des Kontaktkessels so angeordnet, daß der Widerstand des Reaktionsgases über den gesamten Querschnitt gesehen in etwa gleich ist, d.h. daß die Rohrbündel und die Katalysatorschüttung zwischen den Rohrbündeln bezogen auf die Flächeneinheit von gleichen bzw. annähernd gleichen Gasmengen durchströmt werden. Die erforderliche Aufteilung und Ausgestaltung der einzelnen Rohrbündel wird rechnerisch oder empirisch ermittelt. Als Kühlmedium können aufzuheizendes $SO_2$-haltiges Gas, $SO_3$-haltiges Gas, Luft oder Dampf verwendet werden. Es können auch unterschiedliche Kühlmedien durch einzelne Reihen oder Paare von Reihen geleitet werden. Die Führung des Kühlmediums erfolgt im Kreuzstrom, im Kreuzgegenstrom oder ganz oder teilweise im Kreuzgleichstrom zu dem Reaktionsgas. Die Eintrittstemperaturen des Kühlmediums werden so gewählt, daß das Reaktionsgas nicht unter die erforderliche Reaktionstemperatur des Katalysators abgekühlt wird. Der Volumenstrom des Kühlmediums wird entsprechend der aufzunehmenden Reaktionswärme, der gewünschten Austrittstemperatur des Kühlmediums und der gewünschten Temepratur des Reaktionsgases gesteuert. Durch die Anordnung und Ausgestaltung der Kühlrohr-Bündel strömt eine Anteil des $SO_2$-haltigen Gases in einem Teilbereich des Querschnittes des Kontaktkessels durch eine Katalysatorschicht bestimmter Höhe und anschließend in der folgenden Reihe durch ein Rohrbündel, wo dieser Anteil des Gases gekühlt wird und dann wieder durch eine Katalysatorschicht strömt. Die Anzahl der in Gssströmungsrichtung nacheinander versetzt angeordneten Reihen von Rohrbündeln beträgt vorzugsweise mindestens vier. Der Innendurchmesser der Rohre beträgt 2 - 5 cm, insbesondere 2 - 3,3 cm. Die Reihen der Kühlrohr-Bündel können auch paarweise angeordnet werden, wobei der Abstand zwischen den Reihen aufeinanderfolgender Paare unterschiedlich sein kann. Auch der Abstand zwischen den Kühlrohr-Bündeln der einzelnen Paare kann unterschiedlich gestaltet werden.

Der Vorteil der Erfindung besteht darin, daß eine gute und gleichmäßige Steuerung der Temperatur sowohl über den Querschnitt als auch über die Höhe der Katalysatorschüttung und damit eine gute quasi-isotherme Umsetzung erzielt werden kann, wodurch innerhalb eines 1-Horden-Apparates ein Umsetzungsgrad von $SO_2$ zu $SO_3$ erzielt werden kann, für dessen Umsetzung in einem konventionellen Kontaktkessel mindestens 3 Kontakthorden erforderlich sind. Dadurch wird eine optimale Umsetzung mit einer sehr kompakten Apparatur erzielt. Die Befüllung und Entleerung des Kontaktkessels ergibt keine Probleme.

Eine vorzugsweise Ausgestaltung besteht darin, daß die Kühlrohr-Bündel rhombenförmig oder rund ausgebildet sind. Diese Form ist besonders günstig in Bezug auf eine gute Kühlung sowie Befüllung und Entleerung des Kontaktkessels mit Katalysatormasse.

Eine vorzugsweise Ausgestaltung besteht darin, daß an der Wand des Kontaktkessels die Kühlrohr-Bündel in alternierenden Reihen als Halb-Bündel ausgebildet oder daß Abweisbleche angeordnet sind. Dadurch wird auch an der Wand des Kessels eine gleichmäßige Temperaturführung erzielt.

Eine vorzugsweise Ausgestaltung besteht darin, daß der Abstand zwischen den Kühlrohr-Bündeln in den Reihen 10 - 50 cm, vorzugsweise 12 - 20 cm, beträgt. Dieser Abstand ergibt besonders gute Kühlbedingungen im Hinblick auf eine quasi-isotherme Führung.

Eine vorzugsweise Ausgestaltung besteht darin, daß der Abstand der Reihen der Kühlrohr-Bündel 1,5 - 5 cm, vorzugsweise 2 - 3 cm, beträgt. Dieser Abstand ergibt besonders gute Kühlbedingungen.

Eine vorzugsweise Ausgestaltung besteht darin, daß vor der gasseitig gesehen ersten Reihe der Kühlrohr-Bündel eine Schicht der Katalysatormasse angeordnet ist. Die Schichthöhe besträgt etwa 10 - 20 cm. Sie ergibt eine Aufheizung des Gasstromes vor dem Durchströmen der ersten Reihe von Kühlrohr-Bündeln.

Eine vorzugsweise Ausgestaltung besteht darin, daß hinter der gasseitig gesehen letzten Reihe der Kühlrohr-Bündel eine Schicht der Katalysatormasse angeordnet ist. Die Schichthöhe beträgt etwa 10 - 30 cm. Sie dient zur Vergleichmäßigung der Temperatur im austretenden Gasstrom.

Das erfindungsgemäße Verfahren zum Betreiben des Kontaktkessels ist dadurch gekennzeichnet, daß das $SO_2$-haltige Gas mit einer Temperatur von 380 bis 470°C in den Kontaktkessel eingeleitet wird und mit einer Temperatur von 400-480°C, vorzugsweise 420-460°C, aus dem Kessel abgeleitet wird. Mit diesen Temperaturen kann eine gute quasi-isotherme Umsetzung durchgeführt werden.

Eine vorzugsweise Ausgestaltung besteht darin, daß der Kontaktkessel als erste Stufe einer Doppelabsorption betrieben wird, das austretende Gas in einer Zwischenabsorption von $SO_3$ befreit, anschließend in eine zweite Umsetzungsstufe mit normaler Kontakthorde geleitet und das aus dieser Stufe austretende Gas in einer Endabsorption von $SO_3$ befreit wird. Diese Verfahrensweise ergibt einen optimalen Gesamtumsatz von $SO_2$ zu $SO_3$ in einer sehr kompakten Anlage.

Die Erfindung wird anhand von Figuren näher erläutert.

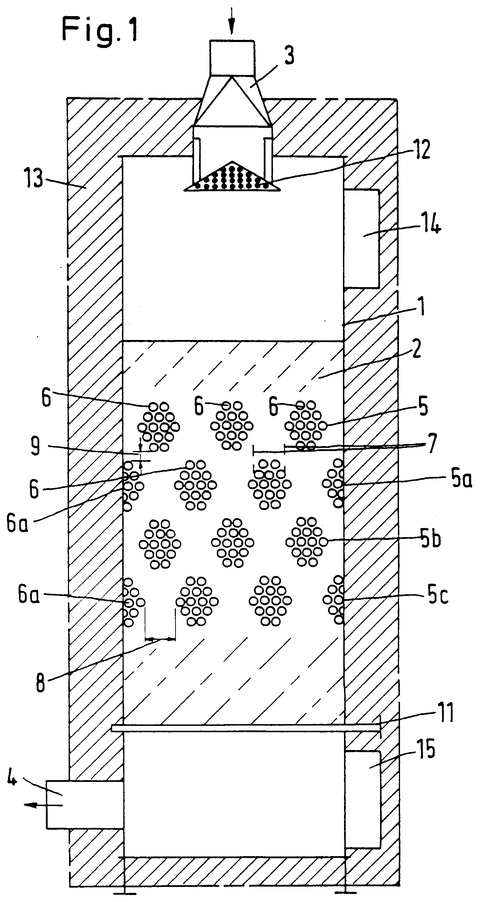

Fig. 1 ist ein Längsschnitt durch einen Kontaktkessel mit vier Reihen von Kühlrohr-Bündeln mit rhombischer Form, wobei der Schnitt quer zu den Kühlrohr-Bündeln verläuft.

Fig. 2 ist ein Längsschnitt durch den Kontaktkessel, wobei der Schnitt parallel zu den Kühlrohr-Bündeln verläuft.

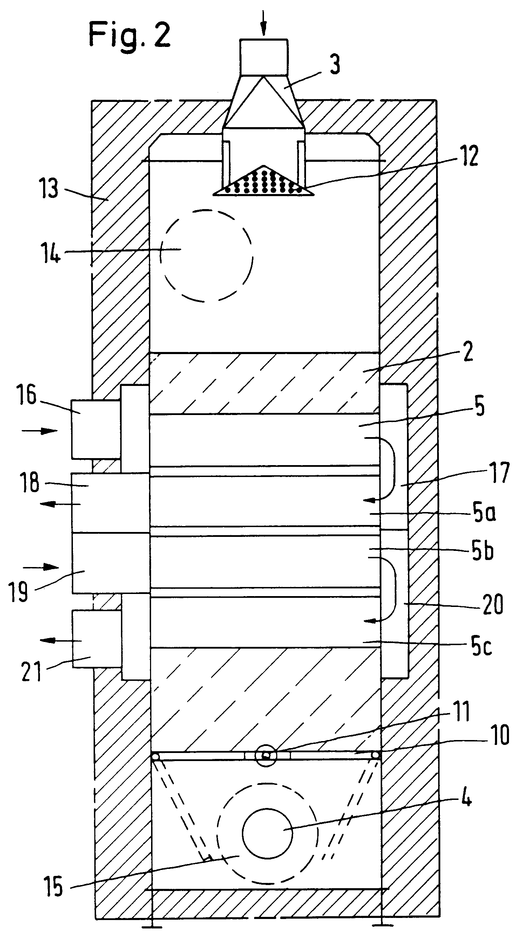

In dem Kessel (1) ist eine Katalysatorschüttung (2) angeordnet. Zur besseren Übersicht ist die Katalysatorschüttung zwischen den Kühlrohr-Bündeln nicht durch Strichelung dargestellt. Am oberen Ende des Kessels (1) ist der Gaseinlaß (3), am unteren Ende der Gasauslaß (4) angeordnet. In der Katalysatorschüttung (2) sind vier Reihen (5, 5a, 5b, 5c) von Kühlrohr-Bündeln (6) angeordnet. Die Bündel (6) der Reihe 5a sind versetzt zu den Bündeln (6) der Reihe (5) in der Projektion der Zwischenräume der Bündel (6) der Reihe (5) angeordnet. Die Projektion der Zwischenräume wird durch Tangenten (7) gebildet, die in Strömungsrichtung des Gases an die äußeren Rohre benachbarter Bündel (6) der Reihe (5) gelegt werden. Sinngemäß sind die Bündel (6) der Reihen (5b) und (5c) angeordnet. Der Abstand (8) zwischen benachbarten Bündeln in den Reihen ist kleiner als die Breite der Bündel in Strömungsrichtung des Gases gesehen. Die Reihen (5), (5a), (5b) und (5c) der Kühlrohr-Bündel (6) sind mit dem Abstand (9) zueinander angeordnet. In den Reihen (5a) und (5c) sind an der Wand des Kessels (1) Halb-Bündel (6a) angeordnet. Die Katalysatorschüttung (2) ruht auf dem gasdurchlässigen Boden (10). Dieser Boden besteht aus zwei Hälften, die durch den Bolzen (11) zusammengehalten werden. Beim Herausziehen des Bolzens (11) klappen die beiden Hälften des Bodens (10) nach unten (gestrichelte Darstellung in Fig. 2), die Katalysatorschüttung rutscht nach unten und kann aus dem Kessel entfernt werden. Der Gaseinlaß (3) ist mit einer gasdurchlässigen Verteilervorrichtung (12) ausgestattet. Der Kessel (1) ist von einer Isolationsschicht (13) umkleidet. Am oberen Ende des Kessels (1) ist eine Einfüllöffnung (14) und am unteren Ende eine Entleerungsöffnung (15) für die Katalysatormasse (2) angeordnet.

In Fig. 2 sind die Kühlrohr-Bündel der Reihen (5), (5a), (5b), (5c) nur durch die obere und untere Begrenzungslinie dargestellt. Das Kühlmedium strömt im Kreuz-Gleichstrom zum Gas durch den Einlaß (16) und die Rohre der Bündel (6) der Reihe (5) in den Umlenkraum (17) und von dort durch die Rohre der Bündel (6) der Reihe (5a) in den Auslaß (18). Durch den Einlaß (19) strömt Kühlmedium durch die Rohre der Bündel der Reihe (5b) in den Umlenkraum (20) und von dort durch die Rohre der Bündel der Reihe (5c) in den Auslaß (21).

Der stehende Kontaktkessel hatte eine rechteckige Grundfläche von 600 mm x 1000 mm und eine Gesamthöhe von 2500 mm. Er enthielt 10 ganze Kühlrohr-Bündel mit jeweils 14 Rohren und 4 Halbbündel mit jeweils 6 Rohren. Die Bündel waren parallel zur langen Grundkante des Kessels in 4 Reihen versetzt untereinander angeordnet. Die Wärmeübertragungsfläche betrug 127 m$^2$ bezogen auf den Rohr-Außendurchmesser. Es wurde eine Katalysatormenge von ca. 500 l eingefüllt. Es wurden $SO_2$-haltige Gase in einer Menge zwischen 315 bis 500 Nm$^3$/h mit $SO_2$-Konzentrationen zwischen 7 bis 10 Vol.-% $SO_2$ durchgesetzt. Die Gaseintrittstemperaturen lagen zwischen 410 bis 490°C. Als Kühlmedium wurde Kühlluft durch die Rohre der Bündel geleitet. Ein Kühlluft-Strom wurde durch die beiden oberen Reihen der Kühlrohr-Bündel im Kreuz-Gleichstrom zum Gasstrom geführt und ein zweiter Kühlluft-Strom durch die beiden unteren Reihen ebenfalls im Kreuz-Gleichstrom.

Beispiele:

| | | | | |
|---|---|---|---|---|
| $SO_2$-haltiges Gas (Nm$^3$/h) | 315 | 400 | 500 | 400 |
| $SO_2$-Konzentration (Vol.-%) | 10,0 | 10,0 | 10,0 | 7,0 |
| Eintrittstemperatur des $SO_2$-haltigen Gases (°C) | 420 | 415 | 445 | 442 |
| Austrittstemperatur des $SO_3$-haltigen Gases (°C) | 445 | 450 | 490 | 460 |
| $SO_2$-Umsatz (%) | 94,5 | 91,0 | 90,0 | 95,9 |

**Patentansprüche**

**1.** Kontaktkessel zur quasi-isothermen katalytischen Umsetzung von $SO_2$ zu $SO_3$ in $SO_2$-haltigen Gasen, bestehend aus einem Kessel (1) mit Katalysatorschüttung (2), Gaseinlaß (3) an einem Ende und Gasauslaß (4) am anderen Ende des Kessels (1) und in der Katalysatorschüttung (2) angeordneten Kühlelementen (5), gekennzeichnet durch

a) in mehreren Reihen (5, 5a, 5a, 5c) hintereinander angeordnete Kühlrohr-Bündel (6), wobei die Bündel (6) einer folgenden Reihe jeweils versetzt in der Projektion (7) der Zwischenräume der Bündel (6) der vorhergehenden Reihe angeordnet sind,

b) der Abstand der Kühlrohre in den Bündeln (6) so ausgelegt ist, daß praktisch keine ganzen Katalysatorkörper in die Bündel (6) eindringen,

c) eine Ausgestaltung der Bündel (6), daß der Druckverlust des Gases in den Bündeln (6) etwa dem Druckverlust in der Katalysatorschicht (2) zwischen den Bündeln (6) entspricht, und

d) einen Abstand zwischen den benachbarten Bündeln (6) in den Reihen (5, 5a, 5b, 5c), der nicht größer ist als die Breite der Bündel (6) in Strömungsrichtung des Gases.

2. Kontaktkessel nach Anspruch 1, dadurch gekennzeichnet, daß die Kühlrohr-Bündel (6) rhombenförmig oder rund ausgebildet sind.

3. Kontaktkessel nach Anspruch 1 oder Anspruch 2, dadurch gekennzeichnet, daß an der Wand des Kontaktkessels (1) die Kühlrohr-Bündel in alternierenden Reihen (5a, 5c) als Halb-Bündel (6a) ausgebildet oder daß Abweisbleche angeordnet sind.

4. Kontaktkessel nach einem der Ansprüche 1 bis 3, dadurch gekennzeichnet, daß der Abstand zwischen den Kühlrohr-Bündeln (6) in den Reihen (5, 5a, 5b, 5c) 10 - 50 cm, vorzugsweise 12 - 20 cm, beträgt.

5. Kontaktkessel nach einem der Ansprüche 1 bis 4, dadurch gekennzeichnet, daß der Abstand der Reihen (5, 5a, 5b, 5c) der Kühlrohr-Bündel (6) 1,5 - 5 cm, vorzugsweise 2 - 3 cm, beträgt.

6. Kontaktkessel nach einem der Ansprüche 1 bis 5, dadurch gekennzeichnet, daß vor der gasseitig gesehen ersten Reihe (5) der Kühlrohr-Bündel (6) eine Schicht der Katalysatormasse (2) angeordnet ist.

7. Kontaktkessel nach einem der Ansprüche 1 bis 6, dadurch gekennzeichnet, daß hinter der gasseitig gesehen letzten Reihe (5c) der Kühlrohr-Bündel (6) eine Schicht der Katalysatormasse (2) angeordnet ist.

8. Verfahren zum Betreiben des Kontaktkessels nach einem der Ansprüche 1 bis 7, dadurch gekennzeichnet, daß das $SO_2$-haltige Gas mit einer Temperatur von 380 bis 470°C in den Kontaktkessel eingeleitet wird und mit einer Temperatur von 400-480°C, vorzugsweise 420-460°C, aus dem Kessel abgeleitet wird.

9. Verfahren nach Anspruch 8 oder 9, dadurch gekennzeichnet, daß der Kontaktkessel als erste Stufe einer Doppelabsorption betrieben wird, das austretende Gas in einer Zwischenabsorption von $SO_3$ befreit, anschließend in eine zweite Umsetzungsstufe mit normaler Kontakthorde geleitet und das aus dieser Stufe austretende Gas in einer Endabsorption von $SO_3$ befreit wird.

**Claims**

1. A contact boiler for the quasi-isothermal catalytic conversion of $SO_2$ to $SO_3$ in $SO_2$-containing gases, which consists of a boiler (1) comprising a catalyst charge (2), a gas inlet (3) at one end and a gas outlet (4) at the other end of the boiler (1), and cooling elements (5) disposed in the catalyst charge (2), characterized by

(a) cooling tube bundles (6) disposed one behind the other in several rows (5, 5a, 5b, 5c), where the bundles (6) of a succeeding row are each disposed offset in the projection (7) of the spaces between the bundles (6) of the preceding row,

(b) the distance of the cooling tubes in the bundles (6) being designed such that virtually no entire catalyst bodies can penetrate the bundles (6),

(c) a design of the bundles (6) to the effect that the pressure drop of the gas in the bundles (6) approximately corresponds to the pressure drop in the catalyst layer (2) between the bundles (6), and

(d) a distance between the adjacent bundles (6) in the rows (5, 5a, 5b, 5c) which is not larger than the width of the bundles (6) in flow direction of the gas.

2. The contact boiler as claimed in claim 1, characterized in that the cooling tube bundles (6) are of rhombic or round shape.

3. The contact boiler as claimed in claim 1 or claim 2, characterized in that on the wall of the contact boiler (1) the cooling tube bundles are formed in alternating rows (5a, 5c) as half-bundles (6a), or that deflector plates are provided.

4. The contact boiler as claimed in one of claims 1 to 3, characterized in that the distance between the cooling tube bundles (6) in the rows (5, 5a, 5b, 5c) is 10 - 50 cm, preferably 12 - 20 cm.

5. The contact boiler as claimed in one of claims 1 to 4, characterized in that the distance between the rows (5, 5a, 5b, 5c) of the cooling tube bundles (6) is 1.5 - 5 cm, preferably 2 - 3 cm.

6. The contact boiler as claimed in one of claims 1 to 5, characterized in that before the first row (5) of the cooling tube bundles (6) viewed from the side of the gas a layer of the catalyst mass (2) is disposed.

7. The contact boiler as claimed in one of claims 1 to 6, characterized in that behind the last row (5c) of the cooling tube bundles (6) viewed from the side of the gas a layer of the catalyst mass (2) is disposed.

8. A method for operating the contact boiler as claimed in one of claims 1 to 7, characterized in that the $SO_2$-containing gas is introduced in the contact boiler at a temperature of 380 to 470°C, and is discharged from the boiler at a temperature of 400 to 480°C, preferably 420 to 460°C.

9. The method as claimed in claim 8 or 9, characterized in that the contact boiler is operated as a first stage of a double absorption, the escaping gas is liberated from $SO_3$ in an intermediate absorption, then delivered to a second conversion stage with a normal contact floor, and the gas escaping from this stage is liberated from $SO_3$ in a final absorption.

**Revendications**

1. Chaudron de contact pour la conversion catalytique quasi-isotherme du $SO_2$ en $SO_3$ dans des gaz contenant du $SO_2$, constituée d'une cuve (1) comportant un garnissage de catalyseur (2), un orifice d'entrée des gaz (3) à une extrémité et un orifice de sortie des gaz (4) à l'autre extrémité du réacteur (1), et d'éléments de refroidissement (5) prévus dans le garnissage de catalyseur (2), caractérisé par

    a) des faisceaux de tubes de refroidissement (6), disposés les uns derrière les autres en plusieurs rangées (5, 5a, 5b, 5c), chacun des faisceaux (6) d'une rangée suivante étant disposé d'une manière décalée, dans la projection (7) des intervalles entre les faisceaux (6) de la rangée précédente,
    b) la distance entre les tubes de refroidissement, dans les faisceaux (6), est telle que pratiquement aucun corps catalyseur entier ne pénètre dans les faisceaux (6),
    c) une configuration des faisceaux (6) telle que la perte de charge du gaz dans les faisceaux (6) corresponde approximativement à la perte de charge dans la couche de catalyseur (2) entre les faisceaux (6), et
    d) une distance entre les faisceaux voisins (6) des rangées (5, 5a, 5b, 5c) qui n'est pas supérieure à la largeur des faisceaux (6) dans le sens d'écoulement du gaz.

2. Réacteur à contact selon la revendication 1, caractérisé en ce que les faisceaux de tubes de refroidissement (6) ont une forme en losange ou circulaire.

3. Réacteur à contact selon la revendication 1 ou 2, caractérisé en ce que, contre la paroi du réacteur à contact (1), les faisceaux de tubes de refroidissement sont, dans des rangées (5a, 5c) en alternance, conçus comme des demi-faisceaux (6a), ou encore que l'on a prévu des chicanes.

4. Réacteur à contact selon l'une des revendications 1 à 3, caractérisé en ce que la distance entres les faisceaux de tubes de refroidissement (6), dans les rangées (5, 5a, 5b, 5c), est de 10 à 50 cm et de préférence de 12 à 20 cm.

5. Réacteur à contact selon l'une des revendications 1 à 4, caractérisé en ce que la distance entre les rangées (5, 5a, 5b, 5c) des faisceaux de tubes de refroidissement (6) est de 1,5 à 5 cm et de préférence de 2 à 3 cm.

6. Réacteur à contact selon l'une des revendications 1 à 5, caractérisé en ce qu'une couche de la masse de catalyseur (2) est disposée en avant de la première rangée (5), quand on regarde côté gaz, des faisceaux de tubes de refroidissement (6).

7. Réacteur à contact selon l'une des revendications 1 à 6, caractérisé en ce qu'une couche de la masse de catalyseur (2) est disposée en arrière de la dernière rangée (5c), quand on regarde côté gaz, des faisceaux de tubes de refroidissement (6).

8. Procédé d'exploitation du réacteur à contact selon l'une des revendications 1 à 7, caractérisé en ce qu'on introduit dans le chaudron de contact le gaz contenant du $SO_2$ à une température de 380 à 470°C et qu'on l'évacue du réacteur à une température de 400 à 480°C et de préférence de 420 à 460°C.

9. Procédé selon la revendication 8 ou 9, caractérisé en ce que la chaudron de contact fonctionne comme premier étage d'une double absorption, le gaz sortant est, dans une absorption intermédiaire, débarrassé du $SO_3$, puis envoyé dans un deuxième étage de transformation ayant une claie normale à contact, et le gaz sortant de cet étage est, dans une absorption finale, débarrassé du $SO_3$.

# Fig.1

Fig. 2